# EUROPEAN PATENT APPLICATION

(11) **EP 4 671 691 A1**
(43) Date of publication of application: **31.12.2025**
(21) Application number: 25182168.2
(22) Date of filing: 11.06.2025
(51) Int. Cl.: G01C 23/00, G05D 1/46, G05D 1/617, G08G 5/30

(54) **REAL-TIME DYNAMIC 4D TRAJECTORY OPTIMIZATION FOR AVIATION**

(30) Priority: 25.06.2024 IN 202411048720; 09.06.2025 US 202519232426
(71) Applicant: ARINC Incorporated, Annapolis, MD 21401 (US)
(72) Inventor: BALACHANDRAN, Vishnu, Kozhikode, KL 673029 (IN); XAVIER, Jerrin, Allappuzha, KA 560064 (IN)
(74) Representative: Dehns

(57) **Abstract**

Systems, devices, methods, and computer-readable media provide improved flight path selections. A system includes a graph representation operator configured to generate a graph of potential flight paths and actual obstacles in the potential flight paths, the potential flight paths extending from a takeoff location to a destination location, a predictive analysis model configured to receive the graph and environmental data and generate predictions of future environmental conditions based on the graph and the environmental data, a cost function and heuristic estimate operator configured to determine costs associated with flight paths of the potential flight paths based on the future environmental conditions, and a predictive pathfinding model configured to identify a flight path of the potential paths based on the costs, aircraft specific performance data, air traffic control constraints, current environmental conditions, and the future environmental conditions.

## Description

### TECHNICAL FIELD

Embodiments regard improving path selection for airborne vehicles. Embodiments can include a selective state space neural network (NN) that works with an improved path selection technique to provide improvements over current trajectory optimization techniques.

### BACKGROUND

The unpredictable nature of modern airspace, marked by volatile weather, variable air traffic, and changing navigational restrictions, demands a trajectory optimization system capable of real-time adaptability. Traditional models, often static and rigid, fail to accommodate such fluctuations, leading to inefficient and unsafe routing.

Existing air traffic routing solutions frequently fall short in forecasting future airspace conditions with sufficient accuracy, compromising their ability to make preemptive, optimal routing decisions. This deficiency results in trajectories that do not maximize fuel efficiency or operational effectiveness.

Many current systems inadequately integrate air traffic control (ATC) constraints into their optimization algorithms, resulting in routes that are less efficient and potentially non-compliant, thereby disrupting effective airspace management. As global attention to climate change intensifies, the aviation sector is under pressure to minimize its environmental footprint. Many existing optimization methods neglect this critical aspect, missing vital opportunities to advance the industry's green avionics initiatives by reducing carbon and other pollutant emissions.

An inability of aviation path selection techniques to swiftly adjust to unforeseen developments, such as sudden weather shifts or airspace restrictions, introduces significant operational inflexibility. This limitation can lead to increased fuel usage, delays, and a compromised commitment to environmental goals.

Algorithms like A*, widely used in prior art, are computationally demanding and struggle to process and adapt to changes in real-time efficiently. This computational burden limits their applicability in dynamic and complex environments, necessitating a more adaptive and less resource-intensive solution.

### BRIEF DESCRIPTION OF DRAWINGS

FIG. 1 illustrates, by way of example, a diagram of an embodiment of a system for airborne vehicle path selection.
FIG. 2 illustrates, by way of example, a diagram of an embodiment of a method for aircraft path selection.
FIG. 3 is a block diagram of an example of an environment including a system for neural network (NN) training.
FIG. 4 illustrates, by way of example, a block diagram of an embodiment of a machine in the example form of a computer system within which instructions, for causing the machine to perform any one or more of the methods or techniques discussed herein, may be executed.

### DETAILED DESCRIPTION

The following description and the drawings sufficiently illustrate teachings to enable those skilled in the art to practice them. Other embodiments may incorporate structural, logical, electrical, process, and other changes. Portions and features of some examples may be included in, or substituted for, those of other examples. Teachings set forth in the claims encompass all available equivalents of those claims.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

In confronting the multifaceted challenges of the aviation industry, the landscape of existing solutions, although extensive, frequently falls short in catering to continuously evolving requirements. The requirements include ensuring operational efficiency, safety, environmental sustainability, and the imperative for dynamic, real-time four-dimensional (4D) trajectory optimization.

Instances of flight path optimization services provided herein set a new standard by, in part, leveraging cloud technology, thereby presenting a groundbreaking solution that surpasses the constraints of traditional models. This cloud-based flight management services (FMS) solution adeptly navigates the complexities of modern aviation, delivering a more adaptable, efficient, and environmentally conscious approach to trajectory optimization. The FMS solutions distinguish themselves in a domain replete with less agile, on-premise solutions.

FMS solution instances include using the synergy of a predictive analysis model and a predictive pathfinding technique, both of which are instrumental in the precise computation of flight trajectories by accounting for a myriad of inputs and dynamically adapting to changing constraints. The predictive analysis model, with its unique capability to sift through and prioritize multiple data points, ensures the optimization of flight paths with unparalleled accuracy. By concentrating on pertinent information and eliminating extraneous noise, it guarantees that trajectory planning is not only efficient but also meets the exacting standards of contemporary aviation.

The predictive analysis model includes sequence modeling that provides a robust alternative to traditional transformer architectures for handling dense data streams. The predictive analysis model design is finely tuned to modern hardware requirements, enhancing memory efficiency and leveraging parallel processing to increase speed and throughput. Within the realm of trajectory optimization, the predictive analysis model includes an innovative framework that processes vast amounts of data with remarkable speed. This rapid information processing aids in real-time trajectory adjustment, allowing for faster responses to dynamic environmental and operational changes than was previously possible. The predictive analysis model has a capability to deliver swift, real-time solutions that not only uphold the highest standards of safety and efficiency but also ensures seamless compliance.

Complementing the predictive analysis model, the predictive pathfinding model offers an additional layer of sophistication by providing dynamic pathfinding capabilities. This model provides real-time replanning, allowing for seamless adjustments to flight paths in response to unforeseen obstacles or alterations in airspace conditions. The integration of the predictive pathfinding model in the FMS solution further enhances the system's ability to offer real-time, adaptive flight planning that can accommodate shifts in weather, air traffic, and other factors.

Together, the predictive analysis model and the predicting pathfinding model improve cloud-based FMS solutions, equipping them with the robustness and foresight in an industry that demands unparalleled precision and adaptability. The predictive analysis model includes a neural forecasting model, which is distinguished by its methodological innovation in employing selective state space models. This approach significantly enhances the accuracy for real-time trajectory optimization. By adeptly selecting relevant state transformations, the predictive analysis model excels in identifying and leveraging the intricate temporal relationships and patterns present in a vast array of data, including past and present flight operations, meteorological predictions, and varying environmental factors. This nuanced method enables the model to surpass traditional forecasting techniques, which do not fully capture the dynamic intricacies of such data at such operational speeds.

The predictive analysis model employs selective state space models with a strategic focus on pertinent sequence transformations, a feature that streamlines a trajectory optimization process. The predictive analysis model thus speeds up the predictive analysis process. By effectively filtering out non-essential data points, the predictive analysis model concentrates on vital information that is crucial for plotting optimal flight paths. This precision in data selection not only enhances computational efficiency but also minimally impacts the optimization process with extraneous noise. Such a targeted approach is particularly advantageous in addressing the intricate challenge of trajectory optimization, which is governed by numerous constraints including airspace regulations, weather conditions, and operational limitations. By prioritizing data that directly impacts these constraints, the predictive analysis model offers a refined solution, ensuring that trajectory planning is both precise and aligned with the multifaceted requirements of commercial aviation.

In contrast to conventional static predictive analysis frameworks, the predictive analysis model stands out for its dynamic adaptability, fine-tuning its parameters in real-time as new data is introduced. This dynamic recalibration mechanism enables the predictive analysis model to swiftly alter its optimization strategies to align with evolving environmental and operational conditions. This capability introduces a degree of flexibility and responsiveness that surpasses that of traditional static predictive analysis models, ensuring that trajectory optimization is both current and highly adaptable to the unpredictable nature of commercial aviation environments.

The predictive pathfinding model is enhanced to work in tandem with forecasts from the predictive analysis model. The predictive pathfinding model continuously adjusts the planned trajectory in response to real-time updates, ensuring optimal routing through rapidly changing airspace conditions. The predictive pathfinding model operates in four dimensions, considering not just the spatial coordinates but also a time component of the paths. This 4D optimization allows for precise control over the flight's vertical and horizontal profiles, as well as its timing, ensuring adherence to ATC constraints and efficient airspace management.

The enhanced predictive pathfinding model can process a multitude of constraints, from environmental impact considerations to ATC regulations, and incorporate them into the optimization process. This results in routes that are not only efficient but also compliant and environmentally conscious.

Instances include a closed-loop feedback mechanism that integrates operational outcomes back into the predictive analysis model. This continuous learning process refines predictive accuracy of the predictive analysis model and enhances the adaptive routing decisions over time. Instances are designed to be scalable, such that the system can manage the optimization of numerous flight trajectories simultaneously while ensuring data security and integrity, which can be an important parameter in commercial aviation.

By optimizing routes for fuel efficiency and reduced emissions, the system directly contributes to sustainable aviation goals. Instances thus offer a green solution that does not sacrifice performance or safety. The combination of predictive analytics from the predictive analysis model and adaptability of the predictive pathfinding model provides airlines with the operational flexibility needed to respond to unforeseen events, ensuring minimal disruption to services. In summary, instances provide advanced analytics, adaptability to dynamic conditions, and its environmentally conscious, regulatory-compliant routing, all delivered through a scalable and secure system designed for the complex demands of modern commercial aviation.

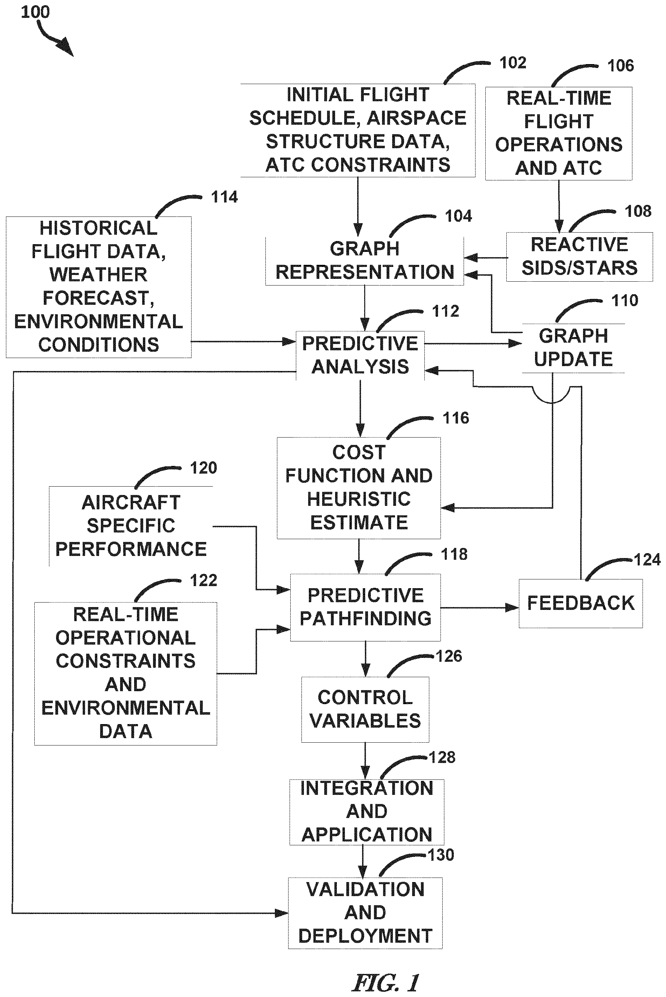

FIG. 1 illustrates, by way of example, a diagram of an embodiment of a system 100 for airborne vehicle pathfinding. The system 100 includes operators that can be implemented in software, hardware, firmware, or a combination thereof. The operators include a graph representation 104, reactive standard instrument departures (SIDS)/standard instrument arrivals (STARS) 108, graph update 110, predictive analysis model 112, cost function and heuristic estimate 116, predictive pathfinding model 118, feedback 124, control variables 126, integration and application 128, validation and deployment 130. The graph representation 104 is communicatively coupled with reactive SIDS/STARS 108, the predictive analysis model 112, and the graph update 110. The predictive analysis model 112 is communicatively coupled with the cost function and heuristic estimate 116, validation and deployment 130, graph update 110, and feedback 124. The graph update 110 is communicatively coupled with the graph representation 104, predictive analysis model 112, and the cost function and heuristic estimate 116. The cost function and heuristic estimate 116 is communicatively coupled to the predictive analysis model 112, the graph update 110, and the predictive pathfinding model 118. The predictive pathfinding model 118 is communicatively coupled to the cost function and heuristic estimate 116, feedback 124, and control variables. The feedback 124 is communicatively coupled to the predictive pathfinding 118 and predictive analysis model 112. The control variables 126 are communicatively coupled to the predictive pathfinding model 118 and the integration and application 128. The integration and application 128 is communicatively coupled to the control variables 126 and the validation and deployment 130. The validation and deployment 130 is communicatively coupled to the integration and application 128 and the predictive analysis model 112.

The predictive analysis model 112 receives a graph representation of a flight path and surrounding environment from the graph representation 102. The graph update 110 changes the graph based on future predicted conditions from the predictive analysis model 112. The changes to the graph are provided to the graph representation 104. The predictive analysis model 112 predicts a future state of the environment around the flight path indicated by the feedback 124. The future state of the environment is provided to the graph update 110 and the cost function and heuristic estimate 116. The cost function and heuristic estimate 116 determines a cost associated with taking flight paths based on the further state of the environment. The predictive pathfinding model 118 determines a path to take based on the costs. The selected path is feedback to the predictive analysis model 112 by the feedback 124. The control variables 126 translates the selected flight path to specific control instructions for a pilot or autopilot system. The integration and application 128 applies the control instructions to flight operations. The validation and deployment 130 performs testing and validation of the system 100 to ensure that it remains reliable.

The graph representation 104 receives an initial flight schedule, airspace structure data, and ATC constraints 102. The graph generated by the graph representation 104 provides a blueprint of relevant airspace. The graph indicates relevant environmental conditions, such as temperature, wind speed, wind direction, objects, object motion, precipitation, or the like, at different altitudes around and near paths that can be taken by an aircraft.

The graph can be continuously updated by the graph update 110. The update can be based on a future state (environmental conditions) prediction by the predictive analysis model 112. The graph provides the groundwork for an optimization process performed the system 100 by providing a comprehensive and adaptable graph of the operational environment. The graph provides flexibility and adaptability in modeling airspace. The graph allows for nuanced optimization that considers a broad spectrum of variables, from geographical constraints to temporal factors. Updates to the graph are provided to the cost function and heuristic estimate 116, such as to ensure optimization decisions are grounded in the latest airspace conditions.

The predictive analysis model 112 leverages deep learning to analyze historical flight data, weather conditions, and environmental factors, producing weather condition and other environmental factor forecasts that inform a flight path selection optimization process. The dynamic nature of the predictive analysis model 112 allows it to adjust predictions in real-time as new data becomes available.

The predictive analysis model 112 provides a forecasting ability that leads to more efficient flight paths by anticipating changes and adjusting routes proactively. The predictive analysis model 112 enables a proactive rather than reactive approach to trajectory optimization. The predictive analysis model 112 directly influences the graph update 110 and cost function and heuristic estimate 116. The predictive analysis model 112 provides predictive analytics that are used to adjust an operational model of the aircraft in real-time. By addressing the computational challenges of traditional algorithms and emphasizing environmental considerations, instances not only solve operational and technical hurdles of dynamic 4D trajectory optimization but also mark a significant step towards sustainable commercial aviation.

The predictive analysis model 112 includes a reinforcement learning (RL) component. The RL component enables the predictive analysis model 112 to make dynamic, real-time decisions. By simulating various flight scenarios, the predictive analysis model 112 learns to navigate the trade-offs between efficiency, safety, and regulatory compliance. The RL component optimizes a reward function that balances these factors, adjusting the model's parameters to maximize the overall performance of the system 100. The predictive analysis model 112 is designed to continuously learn and adapt to new data. This real-time learning capability allows the predictive analysis model 112 to update the prediction of the state of the operational environment in real-time, ensuring that flight path optimizations are always based on the latest available information. Techniques such as transfer learning and incremental learning are employed by the predictive analysis model 112 to facilitate this continuous adaptation without the need for complete retraining.

An example model that can be used as the predictive analysis model 112 is the Mamba model that was developed by researchers from Carnegie Mellon University and Princeton University to address some limitations of transformer models, such as processing long sequences of input. To enable handling long data sequences, Mamba incorporates the Structured State Space sequence model (S4). S4 can effectively and efficiently model long dependencies by combining the strengths of continuous-time, recurrent, and convolutional models, enabling it to handle irregularly sampled data, have unbounded context, and remain computationally efficient both during training and testing.

Mamba, building on the S4 model, introduces enhancements, particularly in its treatment of time-variant operations. Central to its design is a unique selection mechanism that adapts structured state space model (SSM) parameters based on the input. This enables Mamba to selectively focus on relevant information within sequences, effectively filtering out less pertinent data. The model transitions from a time-invariant to a time-varying framework, which impacts both the computation and efficiency of the system.

To address the computational challenges introduced by the time-variance, Mamba employs a hardware-aware algorithm. This algorithm enables efficient computation on modern hardware, like GPUs, by using kernel fusion, parallel scan, and recomputation. The implementation avoids materializing expanded states in memory-intensive layers, thereby optimizing performance and memory usage. The result is an architecture that is significantly more efficient in processing long sequences compared to previous methods.

Additionally, Mamba simplifies its architecture by integrating the SSM design with multilayer perceptron (MLP) blocks, resulting in a homogeneous and streamlined structure, furthering the capability of Mamba to perform general sequence modeling across various data types, including language, audio, and genomics, while maintaining efficiency in both training and inference.

Mamba includes selective-state-spaces (SSMs), which are recurrent models that selectively process information based on the current input. This allows the SSMs to focus on relevant information and discard irrelevant data, potentially leading to efficient processing. Mamba replaces the complex attention and MLP blocks of transformers with a single, unified SSM block. This aims to reduce computational complexity and improve inference speed. Mamba uses a recurrent mode with a parallel algorithm specifically designed for hardware efficiency, potentially further enhancing its performance.

The graph update 110 translates the future state prediction from the predictive analysis model 112 into actionable updates for the graph representation 104 . The actionable updates include adjustments to weights and edges to reflect anticipated changes in flight conditions or airspace availability. The graph update 110 helps ensure that the predictive analysis model operates on the most current and relevant data, enhancing the responsiveness and accuracy of optimization decisions. The graph update 110 serves as a feedback loop between the predictive analysis model 112 and the remainder of the system 100. The graph update 110 ensures that updates to the graph reflect the latest predictions and insights.

The reactive SIDS/STARS 108 receives real-time flight operations and ATC data 106. The reactive SIDS/STARS 108 adjusts standard instrument departure and arrival routes based on real-time operations data, incorporating adjustments suggested by other predictive analysis models to optimize flight paths further. The reactive SIDS/STARS 108 increases routing efficiency and flexibility allowing for seamless integration of predictive insights into practical flight path adjustments. The reactive SIDS/STARS 108 alters the graph generated by the graph representation 104, such as to ensure that changes in departure and arrival strategies are accounted for in the optimization process performed by the system 100.

The cost function and heuristic estimate 116 uses the predicted state data from the predictive analysis model 112 to calculate costs associated with different flight paths and provide heuristic estimates that guide the flight path decision made by the predictive pathfinding model 118. The cost function and heuristic estimate provides a nuanced understanding of the trade-offs involved in different routing choices, helping to ensure that optimization decisions are made with a comprehensive view of their implications. The cost function and heuristic estimate 116 provides the cost to the predictive pathfinding model 118, directly influencing the selection of the most efficient and effective flight paths.

The predictive pathfinding model 118 receives input including aircraft specific performance data 120, real-time operational constraints and environmental data 122, and the cost. The predictive pathfinding model 118 selects a path based on the input. The chosen path is provided to the feedback 124 and the control variables 126. The predictive pathfinding model 118 can employ an advanced version of a D* algorithm. The predictive pathfinding model 118 is capable of adjusting to real-time changes in the graph representation to identify the most efficient flight paths through the dynamically changing airspace. The predictive pathfinding model 118 allows for the real-time adaptation of flight paths to changing conditions, ensuring optimal routing even in the face of unforeseen events or changes. The predictive pathfinding model 118 relies on updated information from the graph update 110 and guidance from the cost function and heuristic estimate 116 to continuously refine flight paths. The integration of the predictions from the predictive analysis model 112 into the predictive pathfinding model 118 transforms the pathfinding process. Predictions inform the predictive pathfinding model 118 about future airspace conditions, weather patterns, and potential ATC constraints. This predictive pathfinding approach enables the predictive pathfinding model 118 to proactively adjust routes, optimizing for conditions that are predicted to occur during the flight. The predictions from the predictive analysis model 112 are integrated into the cost function of the predictive pathfinding model 118 as a predictive layer, allowing for optimization that considers not only spatial dimensions but also the temporal dimension. This 4D optimization accounts for time-varying factors such as airspace congestion and weather changes, enabling the calculation of trajectories that are efficient, safe, and compliant with regulations.

The D* algorithm is an incremental heuristic search algorithm that operates based on the cost and heuristic results from the cost function and heuristic estimate 116. The D* algorithm solves an assumption-based path planning problem, including planning with a free space assumption, where a vehicle has to navigate to given goal coordinates in unknown terrain. The D* algorithm makes assumptions about the unknown part of the terrain (for example: that it contains no obstacles) and finds a shortest path from its current coordinates to the goal coordinates under these assumptions. The vehicle then follows the path. When new map information (such as previously unknown obstacles) is observed, the D* algorithm adds the information to its map and, if necessary, replans a new shortest path from its current coordinates to the given goal coordinates. It repeats the process until it reaches the goal coordinates or determines that the goal coordinates cannot be reached. When traversing unknown terrain, new obstacles may be discovered frequently, so the replanning should be fast. Incremental heuristic search algorithms speed up searches for sequences of similar search problems by using experience with the previous problems to speed up the search for the current one. Assuming the goal coordinates do not change, all three search algorithms are more efficient than repeated A* searches.

D* and its variants have been widely used for mobile robot and autonomous vehicle navigation. The basic operation of D* is now outlined. D* maintains a list of nodes to be evaluated, known as the "OPEN list". Nodes are marked as having one of several states:
NEW, meaning it has never been placed on the OPEN list
OPEN, meaning it is currently on the OPEN list
CLOSED, meaning it is no longer on the OPEN list
RAISE, indicating its cost is higher than the last time it was on the OPEN list
LOWER, indicating its cost is lower than the last time it was on the OPEN list

The algorithm works by iteratively selecting a node from the OPEN list and evaluating it. It then propagates the node's changes to all of the neighboring nodes and places them on the OPEN list. This propagation process is termed "expansion". In contrast to canonical A*, which follows the path from start to finish, D* begins by searching backwards from the goal node. This means that the algorithm is actually computing the A* optimal path for every possible start node. Each expanded node has a back pointer which refers to the next node leading to the target, and each node knows the exact cost to the target. When the start node is the next node to be expanded, the algorithm is done, and the path to the goal can be found by simply following the back pointers.

The real-time operational constraints and environmental data 122 integrates a variety of operational constraints and environmental considerations into the predictive pathfinding model 118 predictive analytics, ensuring that optimization decisions comply with regulatory requirements and environmental considerations. The real-time operational constraints and environmental data 122 helps ensure that flight path optimizations are not only efficient but also safe, compliant, and environmentally responsible. The real-time operational constraints and environmental data 122 influence the predictive analytics process, ensuring that the predictive pathfinding model 118 considers these constraints in its forecasts and adjustments. The real-time operational constraints and environmental data 122 can include airspace restrictions (e.g., no fly zones, restricted zones), weather data (e.g., current weather data, weather forecasts), ATC instructions (e.g., route clearances, altitude assignments, speed adjustments), traffic flow management (e.g., flow restrictions, sequencing and spacing), environmental considerations (e.g., carbon emission zones, noise restrictions), a combination thereof, or the like.

The aircraft specific performance data 120 indicates forces, maneuvers, altitudes, or other parameters that define how and where the aircraft is designed to move. The aircraft specific performance data 120 can define a maximum speed, a maximum acceleration, a maximum altitude, efficiencies (such as fuel efficiency) at different operational parameters, or the like. The aircraft specific performance data 120 helps the predictive pathfinding model 118 determine whether the aircraft is capable of traversing a 3D path within a timeframe in which conditions are favorable for traversing the 3D path (making a 4D consideration). The aircraft specific performance data 120 provides detailed data on aircraft performance characteristics to the predictive pathfinding model 118, allowing for the optimization process to be tailored to the specific capabilities and limitations of each aircraft. The aircraft specific performance data 120 helps ensure that optimization decisions are realistic and achievable, taking into account the unique performance profiles of different aircraft types. The aircraft specific performance data 120 is fed into the predictive pathfinding model 118 directly impacting the predictive pathfinding model and, by extension, the analytics performed by the predictive analytics model 112 and optimization decisions made by the system 100.

The feedback 124 provides a channel that provides the results of optimization to the predictive analytics model 112. The feedback 124 enables continuous learning and refinement of the predictive analysis model 112. The feedback 124 enhances the accuracy and effectiveness of predictive analytics over time, leading to continuous improvements in optimization outcomes. The feedback 124 Closes the loop between operational outcomes and predictive analytics, ensuring that the system 100 evolves and improves with each optimization cycle.

The control variables 126 translates the optimized flight paths determined by the predictive pathfinding model 118 into specific control instructions for pilots or autopilot systems, detailing adjustments to be made to the aircraft's trajectory. The control variables 126 bridge a gap between theoretical optimization and practical application, directly translating optimization outcomes into actionable flight control adjustments. The control variables 126 ensure that the optimized paths are implemented effectively in real-world flight operations by providing clear, actionable instructions based on optimization outcomes.

The integration and application 128 applies the optimized flight paths and control instructions to actual flight operations, executing and monitoring the trajectory of the aircraft to ensure adherence to the planned route and making adjustments as necessary. The integration and application 128 facilitates the real-world application of optimized trajectories, directly impacting flight operations with improved efficiency and safety. The integration and application 128 represents a step in applying the optimization process, where theoretical optimizations are translated into practical improvements in flight efficiency and safety.

The validation and deployment 130 conducts testing and validation of the system 100, ensuring that all components function as intended and that the system 100 is ready for deployment in operational settings. The validation and deployment 130 helps ensure the reliability and efficacy of the system 100 before deployment, guaranteeing that it meets the rigorous demands of commercial aviation. The validation and deployment 130 provides a final check on the readiness of the system 100 for real-world application, ensuring that all components are optimized and functioning correctly.

The system 100 addresses many challenges through the innovative integration of the predictive analysis model 112 and an enhanced predictive pathfinding model 118, offering a novel approach that surpasses existing methods in adaptability, predictive accuracy, and environmental performance. By using dynamic, input-dependent modeling and continuous path adjustments, the system 100 navigates evolving airspace conditions with unmatched efficiency and compliance. The predictive analysis model 112 provides superior forecasting capabilities, enabling accurate anticipation of future conditions and facilitating optimal trajectory planning by the predictive pathfinding model 118. The system 100 incorporates ATC constraints, ensuring all flight paths are both efficient and fully compliant, aiding in smoother airspace management. The system 100 provides eco-friendly routing, thus the system 100 aligns with sustainability objectives, significantly reducing fuel consumption and greenhouse gas emissions, and contributing to green initiatives of the aviation industry. The combination of the predictive analysis model 112 analytics and the predictive pathfinding model 118 adaptability grants airlines the flexibility to respond to unexpected events in real-time, minimizing disruptions and enhancing environmental stewardship.

The data pipeline for the predictive analysis model 112 is complex and multifaceted, involving real-time data ingestion, preprocessing, and normalization. Techniques such as data augmentation and feature engineering are employed to prepare the data for analysis, enhancing the predictive accuracy of the predictive analysis model 112. The technical infrastructure supporting deployment of the predictive analysis model 112 is designed for high scalability and reliability. This involves cloud computing resources, data encryption for security, and microservices architecture for flexibility. The use of advanced deployment techniques ensures that the predictive analysis model 112 can be seamlessly integrated into existing air traffic management systems, with minimal downtime and high availability.

The feedback 124 is in place to collect data on the performance of optimized flight paths. This data is analyzed to identify areas for improvement, with insights fed back into the predictive analysis model 112 for continuous refinement. Advanced ML techniques, including unsupervised learning and anomaly detection, are used to analyze feedback data, driving the iterative enhancement of the forecasting and optimization algorithms.

The graph representation 104 constructs a dynamic graph representation of the airspace, where nodes represent navigational waypoints, airports, and significant points, while edges symbolize feasible flight paths. This graph is updated in real-time to reflect the latest airspace status, including temporary flight restrictions, no-fly zones, and preferred air routes, leveraging the outputs of the predictive analysis model 112 for predictive adjustments.

The graph update 110 uses data streams from the predictive analysis model 112 to dynamically alter the weights and connections within the graph to represent current and forecasted airspace conditions accurately. This enables the system 100 to quickly respond to changes, ensuring that optimization algorithms always operate on the most current and predictive information.

The reactive SIDS/STARS 108 is designed to adjust SIDS/STARS in real-time. It analyzes data from the predictive analysis model 112 to anticipate changes due to varying factors like weather, traffic density, and ATC constraints, ensuring flight paths are optimized for efficiency and compliance. Adjustments in SIDs and STARs are directly reflected in the dynamic graph representation, facilitating seamless incorporation into the flight path optimization process. This ensures that all potential entry and exit strategies are optimized for current conditions, enhancing operational flexibility and efficiency.

The feedback 124 captures operational data from executed flight plans to analyze the performance of the system 100. By evaluating discrepancies between planned and actual flight paths, the system identifies opportunities for refining the predictive capabilities of the predictive analysis model 112, helping to ensure a cycle of continuous improvement. Feedback from various stakeholders, including ATCs, pilots, and airline operations centers, can be integrated to enhance the adaptability and responsiveness of the system 100. This broad spectrum of the feedback 124 ensures the system remains aligned with real-world operational needs and constraints.

The cost function and heuristic estimate 116 emphasizes optimizing flight paths for reduced environmental impact, such as by focusing on minimizing fuel consumption and emissions. By leveraging the analytics of the predictive analysis model 112, the system 100 identifies routes that offer the best balance between operational efficiency and environmental sustainability, supporting the aviation industry's green initiatives. Beyond environmental considerations, the cost function and heuristic estimate 116 helps ensure that optimized routes are practical from an operational standpoint. The cost function and heuristic estimate 116 takes into account aircraft performance characteristics, expected traffic conditions, and fuel requirements to recommend routes that minimize delays and maximize overall operational efficiency.

The system 100 is designed to handle vast volumes of diverse data securely, this architecture ensures the protection of sensitive information while supporting the system's extensive computational needs. Data encryption and secure data storage practices are implemented to safeguard data integrity and confidentiality. The system 100 is built to scale efficiently, capable of processing increasing data volumes and supporting more complex optimization scenarios as the system expands. Cloud-based solutions, containerization, and microservices architecture enable flexible resource allocation and robust system performance under varying loads.

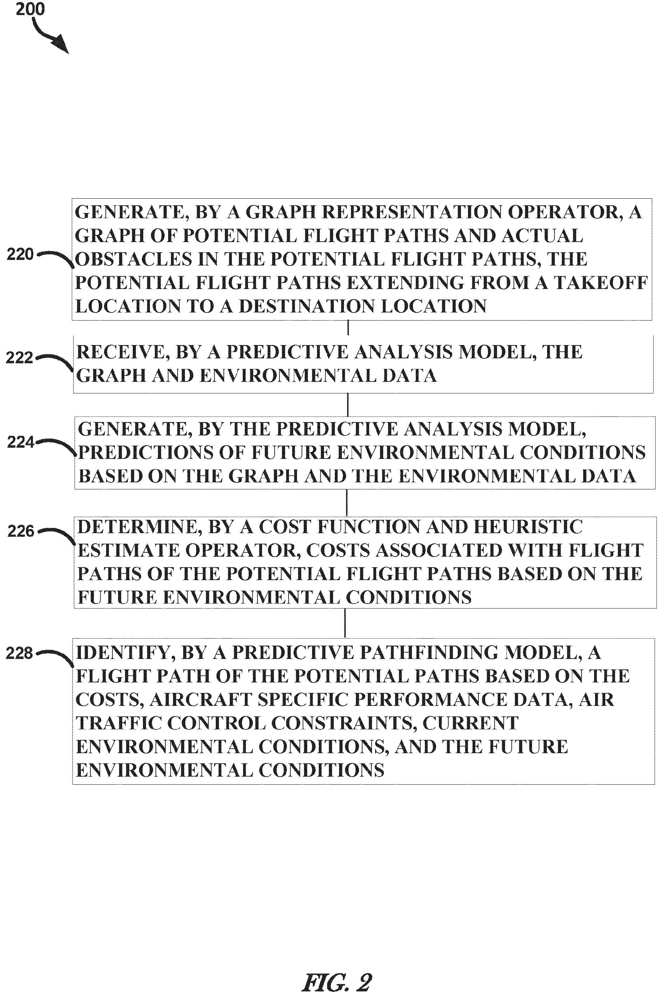

FIG. 2 illustrates, by way of example, a diagram of an embodiment of a method 200 for improved path optimization. The method 200 as illustrated includes generating, by a graph representation operator, a graph of potential flight paths and actual obstacles in the potential flight paths, the potential flight paths extending from a takeoff location to a destination location, at operation 220; receiving, by a predictive analysis model, the graph and environmental data, at operation 222; generating, by the predictive analysis model, predictions of future environmental conditions based on the graph and the environmental data, at operation 224; determining, by a cost function and heuristic estimate operator, costs associated with flight paths of the potential flight paths based on the future environmental conditions, at operation 226; and identifying, by a predictive pathfinding model, a flight path of the potential paths based on the costs, aircraft specific performance data, air traffic control constraints, current environmental conditions, and the future environmental conditions, at operation 228.

The costs can include emissions and fuel efficiency. The predictive analysis model can be implemented as a Mamba model. The predictive pathfinding model can be implemented as a D* algorithm.

The method 200 can further includes generating, by a graph update operator, updates to the graph based on the graph and the future environmental conditions from the predictive analysis model. The method 200 can further include providing, by the graph update operator, the updates to the graph to the graph representation operator and the cost function and heuristic estimate operator. The method 200 can further include providing, by a feedback operator, the identified flight path to the predictive analysis model. The method 200 can further include adjusting, by a reactive standard instrument departures (SIDS)/standard instrument arrivals (STARS) operator, SIDS and STARS data based on ATC data and the future environmental data and provide the adjusted SIDS and STARS data to the predictive analysis model.

AI is a field concerned with developing decision-making systems to perform cognitive tasks that have traditionally required a living actor, such as a person. NNs are computational structures that are loosely modeled on biological neurons. Generally, NNs encode information (e.g., data or decision making) via weighted connections (e.g., synapses) between nodes (e.g., neurons). Modern NNs are foundational to many AI applications, such as classification, device behavior modeling (as in the present application) or the like. The predictive analysis model 112 or other component or operation can include or be implemented using one or more NNs.

Many NNs are represented as matrices of weights (sometimes called parameters) that correspond to the modeled connections. NNs operate by accepting data into a set of input neurons that often have many outgoing connections to other neurons. At each traversal between neurons, the corresponding weight modifies the input and is tested against a threshold at the destination neuron. If the weighted value exceeds the threshold, the value is again weighted, or transformed through a nonlinear function, and transmitted to another neuron further down the NN graph-if the threshold is not exceeded then, generally, the value is not transmitted to a down-graph neuron and the synaptic connection remains inactive. The process of weighting and testing continues until an output neuron is reached; the pattern and values of the output neurons constituting the result of the NN processing.

The optimal operation of most NNs relies on accurate weights. However, NN designers do not generally know which weights will work for a given application. NN designers typically choose a number of neuron layers or specific connections between layers including circular connections. A training process may be used to determine appropriate weights by selecting initial weights.

In some examples, initial weights may be randomly selected. Training data is fed into the NN, and results are compared to an objective function that provides an indication of error. The error indication is a measure of how wrong the NN's result is compared to an expected result. This error is then used to correct the weights. Over many iterations, the weights will collectively converge to encode the operational data into the NN. This process may be called an optimization of the objective function (e.g., a cost or loss function), whereby the cost or loss is minimized.

A gradient descent technique is often used to perform objective function optimization. A gradient (e.g., partial derivative) is computed with respect to layer parameters (e.g., aspects of the weight) to provide a direction, and possibly a degree, of correction, but does not result in a single correction to set the weight to a "correct" value. That is, via several iterations, the weight will move towards the "correct," or operationally useful, value. In some implementations, the amount, or step size, of movement is fixed (e.g., the same from iteration to iteration). Small step sizes tend to take a long time to converge, whereas large step sizes may oscillate around the correct value or exhibit other undesirable behavior. Variable step sizes may be attempted to provide faster convergence without the downsides of large step sizes.

Backpropagation is a technique whereby training data is fed forward through the NN-here "forward" means that the data starts at the input neurons and follows the directed graph of neuron connections until the output neurons are reached-and the objective function is applied backwards through the NN to correct the synapse weights. At each step in the backpropagation process, the result of the previous step is used to correct a weight. Thus, the result of the output neuron correction is applied to a neuron that connects to the output neuron, and so forth until the input neurons are reached. Backpropagation has become a popular technique to train a variety of NNs. Any well-known optimization algorithm for back propagation may be used, such as stochastic gradient descent (SGD), Adam, etc.

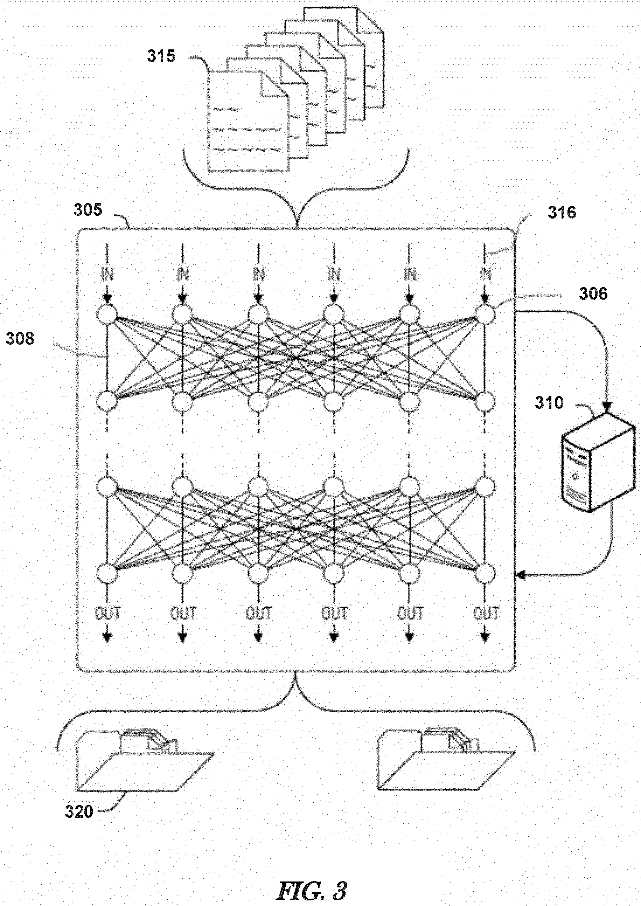

FIG. 3 is a block diagram of an example of an environment including a system for neural network (NN) training. The system includes an artificial NN (ANN) 305 that is trained using a processing node 310. The processing node 310 may be a central processing unit (CPU), graphics processing unit (GPU), field programmable gate array (FPGA), digital signal processor (DSP), application specific integrated circuit (ASIC), or other processing circuitry. In an example, multiple processing nodes may be employed to train different layers of the ANN 305, or even different nodes 306 within layers. Thus, a set of processing nodes 310 is arranged to perform the training of the ANN 305. The predictive analysis model 112, or other component of the system 100, can be trained using the system of FIG. 3.

The set of processing nodes 310 is arranged to receive a training set 315 for the ANN 305. The ANN 305 comprises a set of nodes 306 arranged in layers (illustrated as rows of nodes 306) and a set of inter-node weights 308 (e.g., parameters) between nodes in the set of nodes. In an example, the training set 315 is a subset of a complete training set. Here, the subset may enable processing nodes with limited storage resources to participate in training the ANN 305.

The training data may include multiple numerical values representative of a domain, such as an image feature, or the like. Each value of the training or input 315 to be classified after ANN 305 is trained, is provided to a corresponding node 306 in the first layer or input layer of ANN 305. The values propagate through the layers and are changed by the objective function.

As noted, the set of processing nodes is arranged to train the neural network to create a trained neural network. After the ANN is trained, data input into the ANN will produce valid classifications 320 (e.g., the input data 315 will be assigned into categories), for example. The training performed by the set of processing nodes 306 is iterative. In an example, each iteration of the training the ANN 305 is performed independently between layers of the ANN 305. Thus, two distinct layers may be processed in parallel by different members of the set of processing nodes. In an example, different layers of the ANN 305 are trained on different hardware. The members of different members of the set of processing nodes may be located in different packages, housings, computers, cloud-based resources, etc. In an example, each iteration of the training is performed independently between nodes in the set of nodes. This example is an additional parallelization whereby individual nodes 306 (e.g., neurons) are trained independently. In an example, the nodes are trained on different hardware.

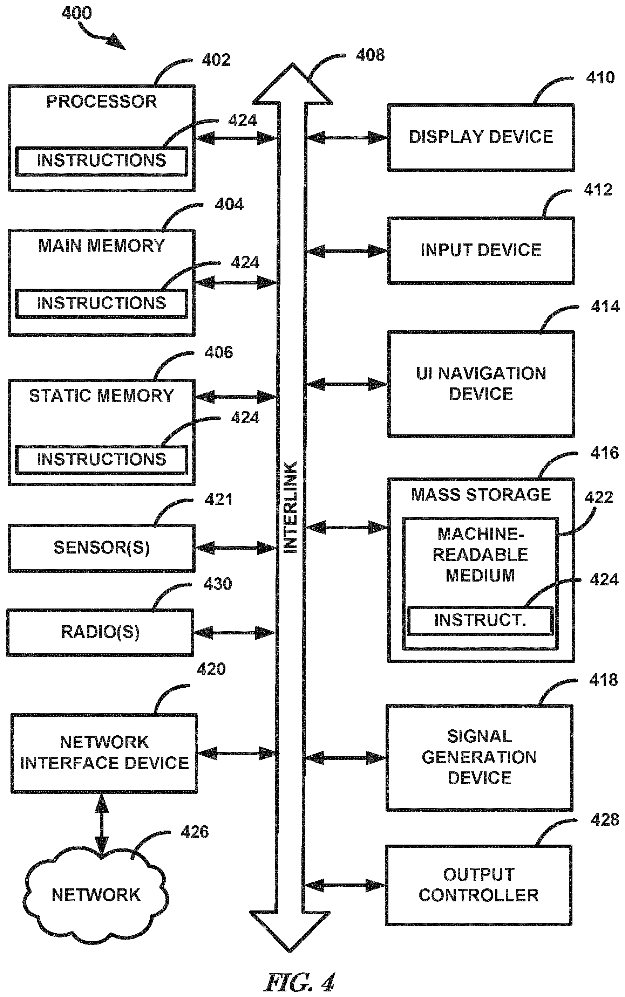

FIG. 4 illustrates, by way of example, a block diagram of an embodiment of a machine in the example form of a computer system 400 within which instructions, for causing the machine to perform any one or more of the methods or techniques discussed herein, may be executed. One or more of the operators 108, 104, 116, 124, 126, 128, 130, model 112, 118, method 200, system of FIG. 1, or other component, operation, or technique, can include, or be implemented or performed by one or more of the components of the computer system 400. In a networked deployment, the machine may operate in the capacity of a server or a client machine in server-client network environment, or as a peer machine in a peer-to-peer (or distributed) network environment. The machine may be a personal computer (PC), server, a tablet PC, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 400 includes a processor 402 (e.g., a central processing unit (CPU), a graphics processing unit (GPU) or both), a main memory 404 and a static memory 406, which communicate with each other via a bus 408. The computer system 400 may further include a video display unit 410 (e.g., a liquid crystal display (LCD) or a cathode ray tube (CRT)). The computer system 400 also includes an alphanumeric input device 412 (e.g., a keyboard), a user interface (UI) navigation device 414 (e.g., a mouse), a mass storage unit 416, a signal generation device 418 (e.g., a speaker), a network interface device 420, and a radio 430 such as Bluetooth, WWAN, WLAN, and NFC, permitting the application of security controls on such protocols.

The mass storage unit 416 includes a machine-readable medium 422 on which is stored one or more sets of instructions and data structures (e.g., software) 424 embodying or utilized by any one or more of the methodologies or functions described herein. The instructions 424 may also reside, completely or at least partially, within the main memory 404 and/or within the processor 402 during execution thereof by the computer system 400, the main memory 404 and the processor 402 also constituting machine-readable media.

While the machine-readable medium 422 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

The instructions 424 may further be transmitted or received over a communications network 426 using a transmission medium. The instructions 424 may be transmitted using the network interface device 420 and any one of a number of well-known transfer protocols (e.g., HTTPS). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of encoding, or carrying instructions for execution by the machine, and includes digital or analog communications signals or other intangible media to facilitate communication of such software.

### Additional Examples

Example 1 includes a flight plan optimization system comprising a graph representation operator configured to generate a graph of potential flight paths and actual obstacles in the potential flight paths, the potential flight paths extending from a takeoff location to a destination location, a predictive analysis model configured to receive the graph and environmental data and generate predictions of future environmental conditions based on the graph and the environmental data, a cost function and heuristic estimate operator configured to determine costs associated with flight paths of the potential flight paths based on the future environmental conditions, and a predictive pathfinding model configured to identify a flight path of the potential paths based on the costs, aircraft specific performance data, air traffic control constraints, current environmental conditions, and the future environmental conditions.

In Example 2, Example 1 further includes, wherein the costs include emissions and fuel efficiency.

In Example 3, at least one of Examples 1-2 further include, wherein the predictive analysis model is implemented as a Mamba model.

In Example 4, Example 3 further includes, wherein the predictive pathfinding model is implemented as a D* algorithm.

In Example 5, at least one of Examples 1-4 further includes a graph update operator configured to generate updates to the graph based on the graph and the future environmental conditions from the predictive analysis model and provide the updates to the graph to the graph representation operator and the cost function and heuristic estimate operator.

In Example 6, at least one of Examples 1-5 further includes a feedback operator configured to provide the identified flight path to the predictive analysis model.

In Example 7, at least one of Examples 1-6 further includes a reactive standard instrument departures (SIDS)/standard instrument arrivals (STARS) operator configured to adjust SIDS and STARS data based on ATC data and the future environmental data and provide the adjusted SIDS and STARS data to the predictive analysis model.

Example 8 includes a method comprising generating, by a graph representation operator, a graph of potential flight paths and actual obstacles in the potential flight paths, the potential flight paths extending from a takeoff location to a destination location, receiving, by a predictive analysis model, the graph and environmental data, generating, by the predictive analysis model, predictions of future environmental conditions based on the graph and the environmental data, determining, by a cost function and heuristic estimate operator, costs associated with flight paths of the potential flight paths based on the future environmental conditions, and identifying, by a predictive pathfinding model, a flight path of the potential paths based on the costs, aircraft specific performance data, air traffic control constraints, current environmental conditions, and the future environmental conditions.

In Example 9, Example 8 further includes, wherein the costs include emissions and fuel efficiency.

In Example 10, at least one of Examples 8-9 further includes, wherein the predictive analysis model is implemented as a Mamba model.

In Example 11, Example 10 further includes, wherein the predictive pathfinding model is implemented as a D* algorithm.

In Example 12, at least one of Examples 8-11 further includes generating, by a graph update operator, updates to the graph based on the graph and the future environmental conditions from the predictive analysis model, and providing, by the graph update operator, the updates to the graph to the graph representation operator and the cost function and heuristic estimate operator.

In Example 13, at least one of Examples 8-12 further includes providing, by a feedback operator, the identified flight path to the predictive analysis model.

In Example 14, at least one of Examples 8-13 further includes adjusting, by a reactive standard instrument departures (SIDS)/standard instrument arrivals (STARS) operator, SIDS and STARS data based on ATC data and the future environmental data and provide the adjusted SIDS and STARS data to the predictive analysis model.

Example 15 includes a non-transitory machine-readable medium including instructions that, when executed by a machine, cause the machine to perform operations of the method of at least one of Examples 8-14.

The specification and drawings are to be regarded in an illustrative rather than a restrictive sense. The accompanying drawings that form a part hereof, show by way of illustration, and not of limitation, specific teachings in which the subject matter may be practiced. The teachings illustrated are described in sufficient detail to enable those skilled in the art to practice the teachings disclosed herein. Other teachings may be utilized and derived therefrom, such that structural and logical substitutions and changes may be made without departing from the scope of this disclosure. This Detailed Description, therefore, is not to be taken in a limiting sense, and the scope of various teachings is defined only by the appended claims, along with the full range of equivalents to which such claims are entitled.

## Claims

1. A flight plan optimization system (100) comprising:
a graph representation operator configured to generate a graph of potential flight paths and actual obstacles in the potential flight paths, the potential flight paths extending from a takeoff location to a destination location;
a predictive analysis model (112) configured to receive the graph and environmental data (122) and generate predictions of future environmental conditions based on the graph and the environmental data;
a cost function and heuristic estimate operator configured to determine costs associated with flight paths of the potential flight paths based on the future environmental conditions; and
a predictive pathfinding model (118) configured to identify a flight path of the potential paths based on the costs, aircraft specific performance data (120), air traffic control constraints, current environmental conditions, and the future environmental conditions.

2. The flight plan optimization system of claim 1, wherein the costs include emissions and fuel efficiency.

3. The flight plan optimization system of claim 1 or 2, wherein the predictive analysis model (112) is implemented as a Mamba model; and optionally wherein the predictive pathfinding model (118) is implemented as a D* algorithm.

4. The flight plan optimization system of claim 1, 2 or 3, further comprising a graph update operator configured to generate updates to the graph based on the graph and the future environmental conditions from the predictive analysis model (112) and provide the updates to the graph to the graph representation operator and the cost function and heuristic estimate operator.

5. The flight plan optimization system of claim 1, 2, 3 or 4, further comprising a feedback operator configured to provide the identified flight path to the predictive analysis model (112); and/or further comprising a reactive standard instrument departures, SIDS/standard instrument arrivals, STARS, operator configured to adjust SIDS and STARS data based on ATC data and the future environmental data and provide the adjusted SIDS and STARS data to the predictive analysis model (112).

6. A method comprising:
generating, by a graph representation operator, a graph of potential flight paths and actual obstacles in the potential flight paths, the potential flight paths extending from a takeoff location to a destination location;
receiving, by a predictive analysis model, the graph and environmental data;
generating, by the predictive analysis model, predictions of future environmental conditions based on the graph and the environmental data;
determining, by a cost function and heuristic estimate operator, costs associated with flight paths of the potential flight paths based on the future environmental conditions; and
identifying, by a predictive pathfinding model, a flight path of the potential paths based on the costs, aircraft specific performance data, air traffic control constraints, current environmental conditions, and the future environmental conditions.

7. The method of claim 6, wherein the costs include emissions and fuel efficiency.

8. The method of claim 6 or 7, wherein the predictive analysis model is implemented as a Mamba model; and optionally wherein the predictive pathfinding model is implemented as a D* algorithm.

9. The method of claim 6, 7 or 8, further comprising:
generating, by a graph update operator, updates to the graph based on the graph and the future environmental conditions from the predictive analysis model; and
providing, by the graph update operator, the updates to the graph to the graph representation operator and the cost function and heuristic estimate operator.

10. The method of any of claims 6 to 9, further comprising providing, by a feedback operator, the identified flight path to the predictive analysis model; and/or further comprising adjusting, by a reactive standard instrument departures, SIDS/standard instrument arrivals, STARS, operator, SIDS and STARS data based on ATC data and the future environmental data and provide the adjusted SIDS and STARS data to the predictive analysis model.

11. A non-transitory machine-readable medium including instructions that, when executed by a machine, cause the machine to perform operations for flight plan optimization, the operations comprising:
generating, by a graph representation operator, a graph of potential flight paths and actual obstacles in the potential flight paths, the potential flight paths extending from a takeoff location to a destination location;
receiving, by a predictive analysis model, the graph and environmental data;
generating, by the predictive analysis model, predictions of future environmental conditions based on the graph and the environmental data;
determining, by a cost function and heuristic estimate operator, costs associated with flight paths of the potential flight paths based on the future environmental conditions; and
identifying, by a predictive pathfinding model, a flight path of the potential paths based on the costs, aircraft specific performance data, air traffic control constraints, current environmental conditions, and the future environmental conditions.

12. The non-transitory machine-readable medium of claim 11, wherein the costs include emissions and fuel efficiency.

13. The non-transitory machine-readable medium of claim 11 or 12, wherein the predictive analysis model is implemented as a Mamba model; and optionally wherein the predictive pathfinding model is implemented as a D* algorithm.

14. The non-transitory machine-readable medium of any of claims 11 to 13, wherein the operations further comprise:
generating, by a graph update operator, updates to the graph based on the graph and the future environmental conditions from the predictive analysis model; and
providing, by the graph update operator, the updates to the graph to the graph representation operator and the cost function and heuristic estimate operator.

15. The non-transitory machine-readable medium of any of claims 11 to 14, wherein the operations further comprise providing, by a feedback operator, the identified flight path to the predictive analysis model; and/or wherein the operations further comprise adjusting, by a reactive standard instrument departures, SIDS,/standard instrument arrivals, STARS, operator, SIDS and STARS data based on ATC data and the future environmental data and provide the adjusted SIDS and STARS data to the predictive analysis model.
